(19) Europäisches Patentamt
European Patent Office
Office européen des brevets

(11) EP 0 668 297 B1

(12) FASCICULE DE BREVET EUROPEEN

(45) Date de publication et mention de la délivrance du brevet:
**09.09.1998 Bulletin 1998/37**

(51) Int Cl.6: **C08F 20/12**, C08F 8/00

(21) Numéro de dépôt: **95400323.2**

(22) Date de dépôt: **15.02.1995**

# (54) Copolymères statistiques vivants (méth)acryliques, copolymères préparés à partir de ces copolymères vivants et les procédés d'obtention correspondants par copolymérisation anionique

Lebende statistische (Meth)acrylatcopolymere, daraus hergestellte Copolymere und Verfahren zur Herstellung dieser Copolymeren durch anionische Polymerisation

Living statistic (meth)acrylat copolymers, copolymers prepared from these living copolymers, and process for preparing these copolymers by anionic copolymerisation

(84) Etats contractants désignés:
**BE CH DE ES FR GB IT LI NL SE**

(30) Priorité: **16.02.1994 FR 9401767**

(43) Date de publication de la demande:
**23.08.1995 Bulletin 1995/34**

(73) Titulaire: **ELF ATOCHEM S.A.**
**92800 Puteaux, Hauts-de-Seine (FR)**

(72) Inventeurs:
- **Wang, Jin-shan**
  **Pittsburgh, PA 15213 (US)**
- **Bayard, Philippe**
  **B-4970 Stavelot (BE)**
- **Teyssie, Philippe**
  **B-4121 Neuville en Condroz (BE)**
- **Vuillemin, Bruno**
  **F-64000 Pau (FR)**
- **Heim, Philippe**
  **F-64000 Pau (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 274 318**
**EP-A- 0 402 219**
**EP-A- 0 408 429**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 668 297 B1

Printed by Jouve, 75001 PARIS (FR)

## Description

La présente invention porte sur des copolymères statistiques vivants (méth)acryliques, sur les copolymères préparés à partir de ces copolymères vivants, ainsi que sur les procédés d'obtention correspondants par copolymérisation anionique.

Découvrir un système parfaitement vivant pour la copolymérisation de monomères (méth)acryliques, en particulier d'esters (méth)acryliques, est un problème qui se pose depuis longtemps dans le domaine de la synthèse des polymères. Des réponses partielles ont été apportées par les découvertes de la polymérisation par transfert de groupe (Webster et al. dans "New Methods for Polymerization Synthesis", Mijs, W.S. Ed. ; Plenum Press, New York, 1992, page 1) ; de la polymérisation anionique sans métal (Reetz et al., Angew. Chem. Int. Ed. Engl. 1988, 27, 1373) ; et de l'initiateur carbanionique classique, modifié par un ligand (Fayt et al., Macromolecules, 1987, 20, 1442 ; Varshney et al., ibid, 1990, 23, 2618 ; Varshney et al., ibid, 1992, 25, 4457 ; brevet américain US-A-4 056 580 ; Vicek et al., J. Makromol. Chem., Rapid Commun. 1992, 13, 163 ; Kitayama et al., Makromol. Chem. ; Suppl. 1989, 15, 167 ; Ballard et al., Macromolecules, 1992, 25, 5907). Il est apparu que seule cette dernière approche, si elle réussissait, procurera un outil général, permettant de combiner facilement d'autres monomères, entre autres les monomères vinyliques et les éthers cycliques, avec les monomères (méth)acryliques.

Bien que l'homopolymérisation anionique vivante et la copolymérisation séquencée anionique vivante des monomères méthacryliques et acryliques (méthacrylates et acrylates notamment) aient été récemment développées à un degré assez poussé, grâce à l'utilisation de plusieurs ligands efficaces, la copolymérisation statistique anionique vivante de mélanges de ces monomères méthacryliques et acryliques est encore à ce jour un défi très difficile. En raison d'une grande différence de réactivité des monomères, la technique de polymérisation par transfert de groupe (GTP) ne permet pas la copolymérisation de mélanges d'acrylates et de méthacrylates (Webster et al., voir supra). On rencontre la même limitation dans la polymérisation anionique sans métal (Reetz et al., voir supra).

Il a été montré que l'utilisation de ligands formant des agrégats mixtes avec le centre actif, tels que LiCl, était une voie efficace pour empêcher le déroulement de la polymérisation anionique d'être perturbé par des réactions secondaires de transfert et de terminaison (Fayt et al., Macromolecules, 1987, 20, 1442 ; Varshney et al., ibid 1990, 23, 2618 ; Varshney et al. ibid, 1992, 25, 4457) et pour déplacer les équilibres entre différents niveaux d'agrégation du centre actif vers un agrégat mixte, comme mentionné ci-dessus (Kunkel et al., Makromol. Chem. ; Makromol. Symp. 1992, 60, 315). A l'aide de cette technique, des copolymères séquencés de méthacrylate de méthyle et d'acrylate de tert.-butyle ont été synthétisés avec une masse moléculaire prévisible et une dispersité étroite, quel que soit le monomère polymérisé en premier (Varshney et al., Macromolecules, 1991, 24, 4997). Cependant, tout à fait à l'opposé, une copolymérisation statistique ou "tapered" (c'est-à-dire conduisant à un polymère dont la composition, le long de la chaîne, est décroissante en un monomère donné) simultanée de ces monomères ne se déroule pas comme attendu et donne des résultats très médiocres en termes de conversion et de distribution des masses moléculaires, en raison de la présence d'une attaque nucléophile sélective d'un groupe ester méthylique très sensible par un anion poly(acrylate de tert.-butyle) stériquement peu encombré, à savoir d'une réaction de terminaison intramoléculaire par un mécanisme de "back-biting" (Jacobs et al., Macromolecules, 1990, 23, 4024).

Ce mécanisme de "back-biting" peut être représenté de la façon suivante dans le cas de la copolymérisation du méthacrylate de méthyle et de l'acrylate de tert.-butyle, un groupe terminal acrylate de tert.-butyle pouvant réagir avec un antépénultième reste méthacrylate de méthyle de la chaîne :

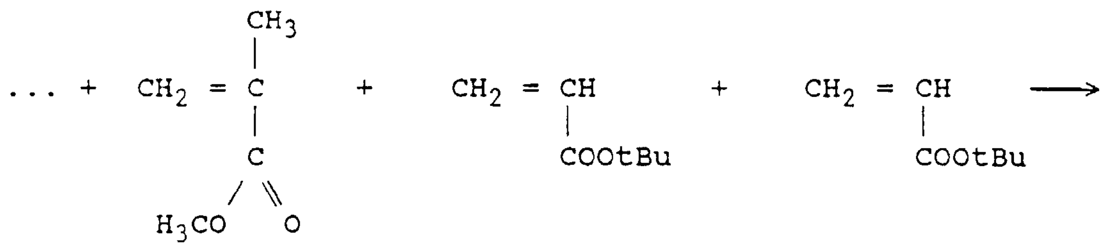

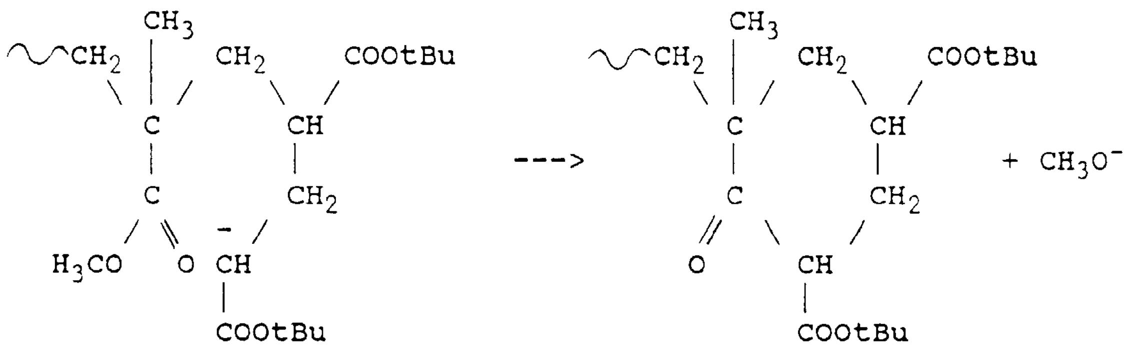

Ainsi, en présence de LiCl comme amorceur dans le tétrahydrofuranne à -78°C, la copolymérisation statistique mettant en jeu les monomères (méth)acryliques est un échec.

Il a maintenant été démontré que ce problème pouvait être résolu par l'utilisation de systèmes initiateurs complexés par des ligands bien définis.

La présente invention a donc d'abord pour objet des copolymères statistiques vivants, répondant à la formule générale (Ia) ou (Ib) :

$$[P(A - co - B)]^{-} M^{+} / n \text{ Ligand} \qquad (Ia)$$

$$M^{+\,-}[P(A - co - B)]^{-} M^{+} / 2n \text{ Ligand} \qquad (Ib)$$

dans laquelle :

- les notations "P" et "co" illustrent l'état copolymérisé d'au moins deux comonomères de base A et B ;
- les comonomères de base sont choisis dans le groupe comprenant les monomères méthacryliques, acryliques et les maléimides, au moins l'un des comonomères étant un monomère acrylique ou méthacrylique ;
- M désigne un métal alcalin ou alcalino-terreux issu d'un amorceur monofonctionnel ou bifonctionnel selon que le copolymère statistique vivant est représenté par la formule respectivement (Ia) ou (Ib) ;
- "Ligand" désigne :

  (a) un complexant macrocyclique non azoté ; ou
  (b) un alcoolate de métal alcalin de formule (II) ou (III) :

$$R^1(OR^2)_mOM^1 \qquad (II)$$

$$M^1(OR^2)_mOM^1 \qquad (III)$$

dans laquelle :

- $M^1$ représente un métal alcalin ;
- $R^1$ est un radical alkyle, linéaire ou ramifié, ayant de 1 à 6 atomes de carbone ou un radical arylalkyle dans lequel le reste alkyle est en $C_1$-$C_6$, ou un radical alkylaryle dans lequel le groupe alkyle a de 1 à 6 atomes de carbone ;
- $R^2$ est un radical alkylène, linéaire ou ramifié, ayant de 2 à 4 atomes de carbone ;
- m est le nombre entier 1, 2 ou 3 ; et

- n est un nombre entier de 1 à 50.

Le terme "monomère (méth)acrylique", tel qu'employé dans la présente description, signifie un monomère choisi parmi les (méth)acrylates de formule respectivement :

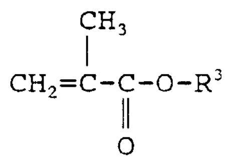 et 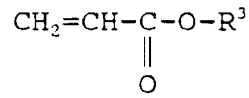 ,

dans laquelle $R^3$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ;
les (méth)acrylates de glycidyle, de norbornyle, d'isobornyle, le méthacrylonitrile, les mono- et di-(alkyl en $C_1$-$C_{18}$)-(méth)acrylamides.

Comme exemples de méthacrylates de la formule ci-dessus, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, de n-hexyle, de 2-éthylhexyle, de cyclohexyle, d'octyle, d'i-octyle, de nonyle, de décyle, de lauryle, de stéaryle, de phényle, de benzyle, de β-hydroxyéthyle, d'hydroxypropyle, d'hydroxybutyle. Le monomère méthacrylique préféré est le méthacrylate de méthyle.

Comme exemples d'acrylates de la formule ci-dessus, on peut citer les acrylates de méthyle, d'éthyle, de n-propyle, d'isopropyle, de n-butyle, de sec.-butyle, de tert.-butyle, d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle et d'éthoxyéthyle.

Le terme "maléimide", tel qu'employé dans la présente description, désigne un monomère maléimide non substitué ou un monomère maléimide N-substitué de formule :

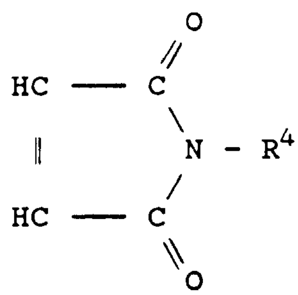

dans laquelle $R^4$ est un radical alkyle, arylalkyle, aryle ou alkylaryle ayant de 1 à 12 atomes de carbone. Des exemples non limitatifs sont : le N-éthyl-maléimide, le N-isopropylmaléimide, le N-n-butylmaléimide, le N-isobutylmaléimide, le N-tert.-butylmaléimide, le N-n-octylmaléimide, le N-cyclohexylmaléimide, le N-benzylmaléimide et le N-phénylmaléimide. Le maléimide préféré est le N-cyclohexylmaléimide.

Le mélange de comonomères devant être copolymérisé selon l'invention est un mélange d'au moins deux comonomères, en toutes proportions, toujours à la condition qu'un comonomère soit de nature acrylique ou méthacrylique.

Lorsque l'amorceur du système d'amorçage selon l'invention est un amorceur monofonctionnel, il a, en particulier, la formule générale (IV) :

$$R^5\text{-}M \qquad \text{(IV)}$$

où $R^5$ désigne :

- un radical alkyle à chaîne droite ou ramifiée, contenant 2 à 6 atomes de carbone ; ou
- un radical aryle à un ou plusieurs cycles, éventuellement substitué ; ou
- un radical alcényle en $C_2$-$C_6$ substitué par aryle ou alkylaryle ; ou
- un radical alkyle, linéaire ou ramifié, contenant 1 à 6 atomes de carbone, substitué par au moins un groupe phényle.

Un tel amorceur monofonctionnel est choisi notamment parmi le sec.-butyllithium, le n-butyllithium, le fluorényllithium, l'alphaméthylstyryllithium, le 1,1-diphénylhexyllithium (DPHLi), le diphénylméthyllithium ou -sodium ou -potassium et le 1,1-diphényl-3-méthylpentyllithium. L'amorceur préféré est le diphénylméthyllithium.

L'amorceur monofonctionnel peut être aussi tout autre amorceur anionique des méthacrylates connu, comme, par exemple, les $\alpha$-lithioisobutyrates ($\alpha$-lithioisobutyrate de méthyle), les amidures, etc.

Lorsque l'amorceur du système d'amorçage selon l'invention est un amorceur bifonctionnel, il a, en particulier, la formule (V) :

$$\begin{array}{ccccccccc} & & M & & & & M & & \\ & & | & & & & | & & \\ R^7 & - & C & - & R^6 & - & C & - & R^7 \\ & & | & & & & | & & \\ & & R^8 & & & & R^8 & & \end{array} \qquad \text{(V)}$$

dans laquelle :

- M est tel que défini ci-dessus ; et
- $R^6$ représente un radical organique divalent, aliphatique, cycloaliphatique, aromatique ou comportant au moins un groupement cycloaliphatique ou aromatique, $R^6$ pouvant comporter des substituants ; et
- $R^7$ et $R^8$ représentent chacun indépendamment un radical organique monovalent, aliphatique, cycloaliphatique, aromatique ou comportant au moins un groupement cycloaliphatique ou aromatique, $R^7$ et $R^8$ pouvant comporter des substituants.

A titre d'exemples d'amorceurs bifonctionnels de formule (V), on peut citer le 1,1,4,4-tétraphényl-1,4-dilithiobutane (TPDLB), le 1,1,4,4-tétraphényl-1,4-disodiobutane.

On peut aussi utiliser des précurseurs d'amorceurs bifonctionnels bien connus, comme le naphtalène lithium, le naphtalène sodium, le naphtalène potassium et leurs homologues.

Les amorceurs bifonctionnels préférés sont le TPDLB, ainsi que le naphtalène lithium, le naphtalène sodium, le naphtalène potassium et leurs homologues, mis en oeuvre en présence d'$\alpha$-méthylstyrène.

Le ligand peut être constitué par un agent complexant macrocyclique non azoté, celui-ci étant alors choisi notamment parmi les polyéthers cycliques (encore dénommés éthers-couronne) et les polythioéthers cycliques, tels que notamment des polythioéthers macrocycliques dont l'anneau macrocyclique contient au moins 14 atomes de carbone et d'oxygène, chaque atome d'oxygène de l'anneau étant séparé des autres atomes d'oxygène de l'anneau par deux ou bien trois atomes de carbone ; de tels polyéthers macrocycliques ont déjà été décrits dans les brevets américains US-A-3 687 978 et US-A-4 826 941. Un ligand préféré est le 2,3,11,12-dibenzo-1,4,7,10,13,16-hexaoxacyclooctadéca-1,11-diène.

D'autres exemples plus précis sont notamment :

- le 1,4,7,10,13,16-hexaoxacyclooctadécane;
- le 2,3,12,13-dibenzo-1,4,11,14-tétraoxacycloeicosa-2,12-diène ;
- le 2,3,12,13,22,23-tribenzo-1,4,11,14,21,24-hexaoxacyclotriaconta-2,12,22-triène ;
- le2,2,7,7,12,12,17,17-octaméthyl-21,22,23,24-tétraoxaquaterène ;
- le 2,3-benzo-1,4,7,10,13-pentaoxacyclopentadéca-2-ène,
- le 2,3-(4'-t-butyl)-1,4,7,10,13,16-hexaoxacyclooctadécane-2-ène ;
- le 2,3,9,10-dibenzo-1,4,8,11-tétraoxacyclotétradéca-2,9-diène ;

- le 2,3,32,33-dibenzo-1,4,7,10,13,16,19,22,25,28,31,34, 37,40,43,46,49,52,55,58-eicosaoxacyclohexaconta-2,32-diène ;
- le 2,3,16,17-dibenzo-1,4,15,18-tétraoxacyclooctacosa-2,16-diène ;
- le 2,6,13,17-tétraoxatricyclo[16.4.O.$O^{7,12}$]docosane ;
- le 2,5,8,15,18,21-hexaoxatricyclo[20.4.O.$O^{9,14}$]hexacosane ;
- le 2,5,12,15,18-pentaoxatricyclo[17.4.O.$O^{6,11}$]tri-cosane ;
- le 2,6,13,16,19-pentaoxatricyclo[18.4.O.$O^{7,12}$]tétra-cosane ;
- le 9,10-benzo-2,5,8,11,14,17-hexaoxabicyclo-[16,4,0]-docosa-9-ène ;
- le 2,3,9,10-dibenzo-1,4,8,11,14,16-hexaoxacyclooctadéca-2,9-diène ;
- le 2,3,11,12-dibenzo-1,4,7,10,13,16,18-heptaoxacycloeicosa-2,11-diène ;
- le 2,3,13,14-dibenzo-8-pentanéthylène-1,4,7,9,12,15,18-heptaoxacycloeicosa-2,13-diène ;
- le 2,3,13,14-dibenzo-1,4,7,9,12,15,18,20-octaoxacyclodocosa-2,13 diène ;
- le 2,4-(1',8'-naphtylène)-1,5,8,11,14-pentaoxacyclohexadéca-2-ène.

Un autre ligand est un alcoolate de formule (II) ou (III). Comme exemples de tels alcoolates, on peut citer ceux dans lesquels le radical $R^1$ est un radical méthyle, éthyle, butyle et benzyle, $R^1$ étant avantageusement le radical méthyle, et $R^2$ est le radical éthylène, propylène, butylène, isopropylène, étant de préférence le radical éthylène. $M^1$ est le lithium, le sodium ou le potassium, et représente, de préférence, le lithium.

Des exemples particuliers sont les suivants :

- $CH_3(OCH_2CH_2)OLi$
- $CH_3(OCH_2CH_2)_2OLi$
- $CH_3(OCH_2CH_2)_3OLi$
- $nBu(OCH_2CH_2)_2OLi$
- $Et(OCH_2CH_2)_2OLi$
- $Li(OCH_2CH_2)_2OLi$
- $Li(OCH_2CH_2)_3OLi$.

Les alcoolates des formules (II) et (III) sont préparés, par exemple, par réaction respectivement de $R^1(OR^2)_mOH$ ou $H(OR^2)_mOH$ avec toute base dont le pKA est supérieur au pKA du couple $R^1(OR^2)_mOM^1/R^1(OR^2)_mOH$ ou du couple $M^1(OR^2)_mOM^1/H(OR^2)_mOH$. Ainsi, les alcoolates de lithium peuvent être préparés par réaction avec du lithium métallique ou par réaction avec un composé organométallique de lithium en solvant polaire ou apolaire.

La présente invention a également pour objet un procédé de fabrication de copolymères statistiques vivants tels que définis ci-dessus, caractérisé par le fait qu'on conduit une copolymérisation anionique d'au moins un monomère A et d'au moins un monomère B, à l'aide d'un système d'amorçage comprenant :

(1) au moins un amorceur monofonctionnel ou bifonctionnel, notamment des formules respectivement (IV) et (V) telles que définies ci-dessus ; et
(2) au moins un ligand choisi parmi (a) les complexants macrocycliques non azotés, ou (b) les alcoolates de métaux alcalins représentés par les formules (II) et (III), telles que définies ci-dessus.

Dans ce procédé, la proportion de ligand(a) utilisé peut varier fortement par rapport à l'amorceur. Cette quantité peut être, par exemple, largement excédentaire par rapport à la quantité molaire d'agent amorceur. Cette quantité peut aussi être égale ou inférieure à la quantité molaire d'agent amorceur. Pour l'obtention de meilleurs résultats, le rapport molaire ligand(s)/amorceur dans le système d'amorçage selon l'invention est compris entre environ 1 et environ 50, de préférence entre environ 1 et environ 5.

Le rapport molaire du ligand (b) à l'amorceur dans le système d'amorçage selon l'invention peut varier dans des limites très larges. La quantité d'alcoolate (II) ou (III) doit être suffisante pour permettre la formation d'un complexe avec le centre actif de polymérisation et ainsi stabiliser ce dernier. La quantité d'alcoolate (II) ou (III) dépend de l'amorceur choisi et des monomères à copolymériser. Le rapport molaire alcoolate (II) ou (III)/amorceur selon l'invention est généralement compris entre 1 et 50. Pour l'obtention de meilleurs résultats, ce rapport est compris, de préférence, entre 3 et 10.

Dans le procédé suivant l'invention, la copolymérisation s'effectue en l'absence d'humidité et d'oxygène, en masse ou en présence d'au moins un solvant aprotique polaire ou apolaire choisi, de préférence, parmi les solvants aromatiques, tels que le benzène, le toluène et l'éthylbenzène, ou bien le tétrahydrofuranne, le diglyme, le tétraglyme, l'orthoterphényle, le biphényle, la décaline, la tétraline, ou le diméthylformamide ou un mélange de ceux-ci. Comme solvant, on peut citer en particulier le tétrahydrofuranne, le toluène et un mélange des deux.

La température de copolymérisation peut varier entre environ -100°C et +120°C, de préférence entre environ -78°C et +70°C, avantageusement entre -40°C et +10°C.

Pour obtenir des copolymères statistiques à partir de ces copolymères statistiques vivants, on les désactive par réaction avec une source de protons consistant notamment en un alcool, de l'eau ou un acide protonique ; puis, le cas échéant, on conduit une transestérification ou une hydrolyse en milieu acide du copolymère obtenu.

Les copolymères statistiques selon l'invention ainsi obtenus par voie anionique et comprenant au moins un motif (méth)acrylique sont nouveaux ; ils ont une masse moléculaire moyenne en nombre généralement comprise entre 5 000 et 500 000 ; et un indice de polydispersité $\overline{Mw}/\overline{Mn}$ généralement compris entre 1,05 et 3. On peut souligner ici que les copolymères statistiques obtenus par voie radicalaire ont toujours un indice de polydispersité supérieur à 1,5.

Les copolymères statistiques selon l'invention peuvent être hydrolysés à une température allant de 70°C à 170°C environ, sous une pression allant de 1 à 15 bars et en présence de 0,5 à 10% environ en poids, par rapport au copolymère, d'un catalyseur acide, tel que l'acide paratoluène sulfonique, l'acide méthane toluène sulfonique ou l'acide chlorhydrique, dans un solvant polaire, tel que le dioxanne. Après hydrolyse, les copolymères comportant des séquences d'acide acrylique et/ou méthacrylique peuvent être précipités dans l'heptane, filtrés, lavés pour éliminer toute trace de catalyseur et finalement séchés. Ils peuvent aussi être ultérieurement neutralisés au moyen de potasse méthanolique ou encore d'hydroxyde de tétraméthylammonium en solution dans un mélange de toluène et de méthanol, afin de former les ionomères correspondants.

Lorsqu'au moins un acrylate d'alkyle tertiaire ou secondaire entre dans la constitution d'un copolymère selon l'invention, de tels motifs acrylate peuvent également être transestérifiés de manière connue en motifs acrylate d'alkyle primaire.

Par ailleurs, les copolymères statistiques vivants selon l'invention peuvent conduire par copolymérisation séquencée également par voie anionique à des copolymères à blocs comprenant au moins un bloc à base d'un copolymère statistique de l'invention ou préparé par le procédé de l'invention, comportant au moins un motif (méth)acrylique, et un bloc ou plusieurs blocs, identiques ou différents, chacun à base d'un polymère autre que le copolymère statistique précité. Les monomères pour ce ou ces blocs supplémentaires sont choisis notamment parmi les monomères acryliques, méthacryliques et les maléimides.

De tels copolymères séquences peuvent aussi être soumis, de la même façon que celle indiquée ci-dessus, à une transestérification ou une hydrolyse.

Les exemples suivants illustrent la présente invention sans en limiter la portée. Dans ces exemples, les abréviations suivantes sont utilisées :

- MMA = méthacrylate de méthyle ;
- tBuA = acrylate de tert.-butyle ;
- AE = acrylate d'éthyle ;
- $Ph_2CHNa$ = diphénylméthylsodium ;
- DB-18-CE-6 = 2,3,11,12-dibenzo-1,4,7,10,13,16-hexaoxacyclooctadéca-2,11-diène;
- THF = tétrahydrofuranne ;
- $AlEt_3$ = triéthylaluminium ;
- NCHMI = N-cyclohexylmaléimide ;
- MAISOBOR = méthacrylate d'isobornyle.

<u>Exemples 1 à 15</u> :

<u>Copolymérisation aléatoire de MMA et de tBuA en présence du système d'amorçage : amorceur $Ph_2CHNa$/ligand DB-18-CE-6</u>

<u>Mode opératoire général</u>

Le MMA et le tBuA ont été tout d'abord distillés sous vide sur $CaH_2$, puis stockés sous atmosphère d'azote à -20°C. Avant la polymérisation, on leur a ajouté une solution d'$AlEt_3$ à 10% en poids dans l'hexane jusqu'à ce qu'une couleur vert-jaunâtre persistante ait été observée. On a ensuite distillé le mélange sous pression réduite juste avant l'utilisation.

On a recristallisé le DB-18-CE-6 dans de l'éther de pétrole.

On a purifié le THF en le portant au reflux sur un complexe benzophénone-sodium frais, une couleur pourpre foncé indiquant un solvant exempt d'oxygène et d'humidité.

On a préparé le $Ph_2CHNa$ en faisant réagir à la température ambiante du diphénylméthane avec du naphtalène-sodium dans le THF pendant 24 heures, la solution de naphtalène-sodium résultant de l'addition préalable du sodium sur le naphtalène dans le THF à la température ambiante.

On a conduit la copolymérisation anionique de chaque mélange de MMA et de tBuA dans un réacteur en verre

flambé sous atmosphère d'azote. Tout d'abord, on a introduit le DB-18-CE-6 que l'on a séché comme préalablement décrit. Le THF et l'amorceur sont transférés dans le réacteur en verre à l'aide d'un septum de caoutchouc et d'un capillaire en acier inoxydable ou d'une seringue. On a ajouté goutte à goutte la solution d'amorceur au THF contenant le ligand DB-18-CE-6 jusqu'à ce que la couleur de l'amorceur persiste. Après l'addition de la quantité désirée d'amorceur correspondant à la masse voulue, on a refroidi la solution à -78°C, on a introduit la quantité requise de mélange de MMA et tBuA, et on a conduit la copolymérisation pendant quelques secondes jusqu'à une heure, en fonction de la réactivité, donc de la vitesse de polymérisation. On a ensuite arrêté la copolymérisation par addition de méthanol acide, et on a récupéré le copolymère par précipitation dans le méthanol ou dans un mélange méthanol/eau (50/50). On a séché sous vide le polymère brut à 80°C pendant 48 heures.

Caractérisation

Une chromatographie d'exclusion stérique (SEC) a été effectuée par utilisation d'un appareil de chromatographie liquide Hewlett-Packard 1090, équipé de quatre colonnes ($10^5$, $10^3$, 500 et 100 Å) et d'un détecteur d'indice de réfraction Hewlett-Packard 1037 A. Des polystyrènes standards ont été utilisés pour l'étalonnage, et les masses moléculaires moyennes en nombre (Mn) et en poids (Mw) ainsi que la polydispersité du polymère ont été calculées en conséquence. La température de transition vitreuse a été mesurée par calorimétrie différentielle (DSC) à l'aide d'un appareil Dupont 9000. L'appareil a été étalonné avec de l'indium et du mercure. Les échantillons ont été tout d'abord chauffés jusqu'à 150°C, refroidis rapidement à la température ambiante, puis analysés à nouveau à raison de 20°C/min. Les analyses de composition et de structure des copolymères ont été effectuées au moyen de RMN $^1H$ et de RMN $^{13}C$ à l'aide d'un spectromètre Brucker AM 400.

Les résultats sont présentés dans le Tableau 1. On peut voir que la température de transition vitreuse décroît de façon monotone avec l'augmentation de la proportion de tBuA dans le copolymère, ce qui confirme une parfaite copolymérisation statistique.

Tableau 1 : Copolymérisation statistique du MMA et du tBuA dans le THF à -78°C
Système d'amorçage : amorceur : $Ph_2CHNa$
ligand : DB-18-CE-6

| Exemple | Rapport molaire | | Rapport molaire [ligand]/[amorceur] | Conversion (%) | $\overline{Mn}$ (SEC) | $\overline{Mw}/\overline{Mn}$ (SEC) | f * (SEC) | Rapport molaire de tBuA dans le copolymère (RMN $^1H$) | Tg (°C) |
|---|---|---|---|---|---|---|---|---|---|
| | MMA | tBuA | | | | | | | |
| 1 (référence) | 1,00 | 0,00 | 2 | 100 | 14000 | 1,07 | 0,96 | 0,00 | 113 |
| 2 | 0,93 | 0,07 | " | 100 | 19400 | 1,08 | 0,86 | 0,10 | 111 |
| 3 | 0,88 | 0,12 | " | 100 | 19000 | 1,07 | 0,82 | 0,17 | 106 |
| 4 | 0,75 | 0,25 | " | 100 | 16500 | 1,11 | 0,92 | 0,19 | 89 |
| 5 | 0,52 | 0,48 | " | 96 | 15300 | 1,21 | 0,99 | 0,47 | 60 |
| 6 | 0,37 | 0,63 | " | 97 | 12000 | 1,35 | 1,20 | 0,72 | 43 |
| 7 | 0,10 | 0,90 | " | 94 | 14200 | 1,08 | 0,97 | 0,93 | 39 |
| 8 (référence) | 0,00 | 1,00 | " | 100 | 16400 | 1,13 | 0,89 | 1,00 | 33 |
| 9 | 0,90 | 0,10 | " | 100 | 19400 | 1,10 | 0,91 | 0,10 | |
| 10 | 0,83 | 0,17 | " | 100 | 19000 | 1,05 | 0,90 | 0,15 | |
| 11 | 0,71 | 0,29 | " | 100 | 16500 | 1,10 | 0,92 | 0,30 | |
| 12 | 0,52 | 0,48 | " | 96,0 | 15300 | 1,20 | 0,99 | 0,48 | |
| 13 | 0,28 | 0,72 | " | 97,0 | 15000 | 1,25 | 0,93 | 0,71 | |
| 14 (comparatif) | 0,20 | 0,80 | 0 | 6,8 | 3700 | 2,5 | 0,81 | 0,87 | |
| 15 | 0,07 | 0,93 | 2 | 94,0 | 14200 | 1,10 | 0,97 | 0,92 | |

* f = efficacité de l'initiateur = $Mn_{calculée} / Mn_{SEC}$ ( $Mn_{calculée}$ = Conversion x Poids des comonomères (g) / $C_{initiateur}$ (mole) )

Contrairement à l'Exemple Comparatif effectué en l'absence de DB-18-CE-6, dans tous les cas, la distribution des masses moléculaires est étroite (1,05 - 1,20) avec une distribution symétrique unimodale. On a également démontré le caractère vivant de la copolymérisation anionique de mélanges de MMA et de tBuA dans le THF à -78°C à l'aide de $Ph_2CHNa$ comme initiateur en présence de deux équivalents molaires de DB-18-CE-6. A cet effet, une première dose de mélange de MMA et tBuA (0,032 mole) est tout d'abord polymérisée ($PH_2CHNa$, 5,96 x $10^{-4}$ moles ; DB-18-CE-6/$Ph_2CHNa$ = 2,0) dans le THF à -78°C, et, 30 minutes plus tard, la même quantité de comonomères est ajoutée. Comme résultat, le tracé SEC montre clairement que, lors de l'addition de la seconde dose de comonomères, le pic SEC se déplace vers la position des masses moléculaires supérieures sans contamination du premier PMMA-co-PtBuA. La Mn du premier copolymère était de 6200 (Mw/Mn = 1,10, f = 0,92) et, de façon tout à fait cohérente, la Mn du copolymère final était de 12 500 (Mw/Mn = 1,10, f = 0,99).

On peut voir également que la conversion des monomères est quantitative (95 - 100%), que l'efficacité d'amorçage est élevée (0,93 en moyenne), et que la composition de comonomères dans les copolymères résultants est très proche de celle de l'alimentation initiale.

En comparant des spectres de RMN $^{13}C$ 100 MHz au niveau des groupes carbonyle d'unités de PMMA et PtBuA à 173,5 - 180,2 ppm, enregistrés dans $CDCl_3$ à 40°C, d'un PMMA-co-PtBuA statistique (Exemple 11 Tableau 1), d'un PMMA-b-PtBuA séquencé (copolymérisation séquencée dans les mêmes conditions que la copolymérisation statistique ci-dessus : 0,1 mole de MMA ; 0,083 mole de tBuA ; 0,80 x $10^{-3}$ mole d'amorceur $Ph_2CHNa$ ; conversion : 100%) et d'un mélange équimolaire d'homo-PMMA et d'homo-PtBuA, on peut dire que le copolymère PMMA-co-PtBuA ainsi préparé n'est pas un copolymère séquencé ni un mélange des deux homopolymères correspondants, mais un copolymère statistique.

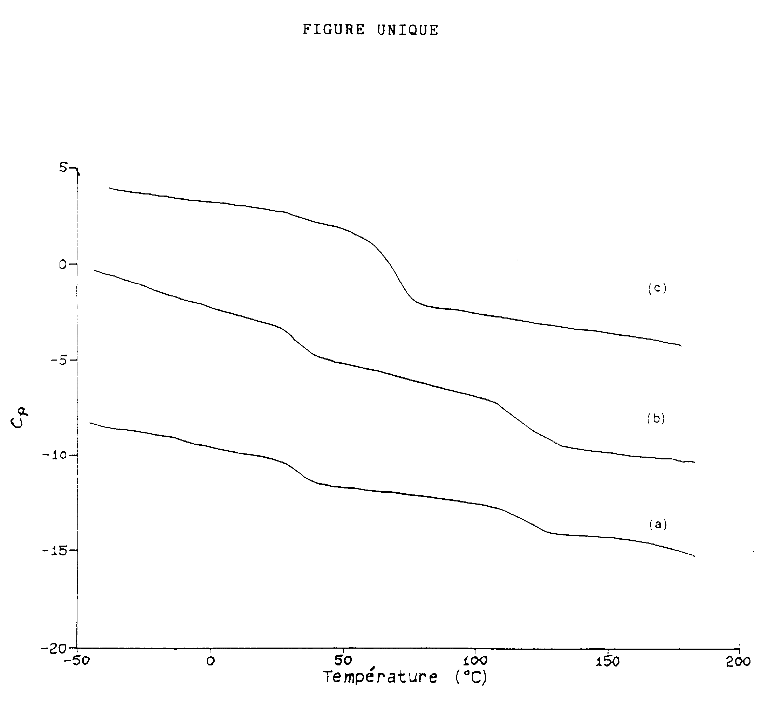

Ces conclusions sont confirmées par les mesures en DSC. La Figure unique du dessin annexé montre les diagrammes DSC des échantillons qui ont été déjà caractérisés par la spectroscopie RMN $^{13}C$ décrite ci-dessus. Dans les cas du copolymère séquencé PMMA-b-PtBuA et du mélange des deux homopolymères correspondants (courbes respectivement (a) et (b)), deux transitions distinctes apparaissent à environ 22°C et 102°C, caractéristiques des segments respectivement PtBuA et PMMA. Ceci confirme qu'il y a une séparation de phases importante entre PMMA et PtBuA. Au contraire, une seule Tg de 67°C est détectée pour le copolymère statistique PMMA-co-PtBuA (courbe (c)).

<u>Exemples 16 à 28</u> :

On a procédé comme dans les Exemples précédents mais en remplaçant $Ph_2CHNa$ par $Ph_2CHLi$, et DB-18-CE-6 par $CH_3OCH_2CH_2OCH_2CH_2OLi$. Les résultats sont présentés dans le Tableau 2 suivant.

Tableau 2 : Copolymérisation statistique du MMA et du tBuA

Système d'amorçage : amorceur : $Ph_2CHLi$

ligand : $MeOCH_2CH_2OCH_2CH_2OLi$

| Exemple | Monomères (% en moles) | | Rapport molaire [ligand]/[amorceur] | T (°C) | Solvant | Conversion (%) | $\overline{Mn}$ (SEC) | $\overline{Mw}/\overline{Mn}$ | f | tBuA dans le copolymère (% en moles) | Tg (°C) |
|---|---|---|---|---|---|---|---|---|---|---|---|
| | MMA | tBuA | | | | | | | | | |
| 16 (référence) | 0,0 | 100,0 | 10 | -78 | THF | 100 | 17 000 | 1,09 | 0,90 | | |
| 17 | 7,5 | 92,5 | 10 | " | " | 100 | 21 000 | 1,12 | 0,88 | | |
| 18 | 23,8 | 76,2 | 10 | " | " | 100 | 20 200 | 1,14 | 0,96 | | |
| 19 | 42,2 | 57,8 | 10 | " | " | 100 | 21 700 | 1,14 | 0,86 | 42 | 78 |
| 19 bis | " | " | 5 | " | " | 85 | 18 500 | 1,22 | 0,83 | 44 | 80 |
| 19 ter | " | " | 2 | " | " | 86 | 42 600 | 1,29 | 0,37 | 45 | 82 |
| 19 quater | " | " | 1 | " | " | 80 | 77 850 | 1,52 | 0,19 | 37 | 70 |
| 20 | 63,0 | 37,0 | 10 | " | " | 95 | 17 400 | 1,26 | 0,97 | | |
| 21 | 86,8 | 13,2 | 10 | " | " | 95 | 19 600 | 1,34 | 0,85 | | |
| 22 (référence) | 100,0 | 0,0 | 10 | " | " | 98 | 20 000 | 1,45 | 0,87 | | |
| 23 (référence) | 0,0 | 100,0 | 10 | -40 | Toluène/THF (9/1 v/v) | 98 | 32 000 | 1,17 | 0,54 | | |
| 24 | 7,5 | 92,5 | 10 | " | " | 100 | 32 000 | 1,30 | 0,55 | | |
| 25 | 23,8 | 76,2 | 10 | " | " | 99 | 32 100 | 1,40 | 0,56 | | |
| 26 | 42,2 | 57,8 | 10 | " | " | 97 | 34 200 | 1,30 | 0,52 | | |
| 27 | 63,0 | 37,0 | 10 | " | " | 90 | 30 200 | 1,63 | 0,54 | | |
| 28 | 86,8 | 13,2 | 10 | " | " | 98 | 32 100 | 1,35 | 0,54 | | |

Exemples 29 à 33 :

Copolymérisation statistique MMA/NCHMI

On procède comme à l'Exemple précédent 17, mais on utilise un amorceur préparé en faisant réagir, à température ambiante, la solution de naphtalène potassium, résultat de l'addition préalable du potassium sur le naphtalène dans le THF, avec l'α-méthylstyrène. Le rapport molaire du ligand à l'amorceur est 10. Le solvant utilisé est le THF. Les résultats obtenus sont indiqués dans le Tableau 3.

Exemples 34 à 36 :

Copolymérisation statistique MMA/MAISOBOR

On procède comme à l'Exemple 17. La température de polymérisation est -20°C. L'amorceur et le ligand sont ceux de l'Exemple 17. Le rapport molaire du ligand à l'amorceur est de 10. Les résultats sont indiqués dans le Tableau 4. On peut noter la Tg élevée des copolymères obtenus. La technique de polymérisation conduit donc à des matériaux dont la tenue à la chaleur est bonne.

Tableau 3 : Copolymérisation d'un mélange de MMA et de NCHMI par amorçage avec le système Naphtalène potassium/α-MeSt/$MeOCH_2CH_2OCH_2CH_2OLi$ dans le THF à -78°C

| Exemple | % Poids NCHMI | % Poids MMA | Temps (heures) | Conversion (%) | $\overline{Mn}_{Calculée}$ | $\overline{Mn}_{SEC}$ | $\overline{Mw}/\overline{Mn}$ | Tg (°C) |
|---|---|---|---|---|---|---|---|---|
| 29 | 5 | 95 | 10 | 96 | 22500 | 38200 | 1,21 | 121 |
| 30 | 10 | 90 | 10 | 100 | 24300 | 47000 | 1,35 | 123 |
| 31 | 15 | 85 | 10 | 100 | 24800 | 52300 | 1,24 | 125 |
| 32 | 20 | 80 | 10 | 100 | 23500 | 30200 | 1,42 | 130 |
| 33 | 100 | - | 10 | 100 | 16000 | 39600 | 1,41 | 260 |

Tableau 4 :

| Copolymérisation statistique MMA/MAISOBOR | | | | | | |
|---|---|---|---|---|---|---|
| Exemple | Monomères | Solvant | Composition molaire en monomères | $\overline{Mn}_{SEC}$ | $\overline{Mw}/\overline{Mn}$ | Tg (%) |
| 34 | MMA/ MAISOBOR | Toluène/THF 90/10 (v/v) | 90/10 | 90 000 | 1,6 | 136 |
| 35 | MMA/ MAISOBOR | THF | 80/20 | 30 000 | 1,6 | 140 |
| 36 | MMA/ MAISOBOR | Toluène/THF 90/10 (v/v) | 50/50 | 39 000 | 2,9 | 153 |

Exemples 37 à 39 :

Copolymérisation statistique MMA/AE

On procède comme à l'Exemple 17. La concentration totale en monomères dans le réacteur est de 5% par rapport à la composition solvant et monomères. Le solvant utilisé est le toluène. Le rapport ligand/amorçeur est de 10. La température de polymérisation est de -30°C. La masse molaire calculée est de 50 000. Les résultats obtenus sont indiqués dans le Tableau 5.

Tableau 5 :

| Copolymérisation statistique MMA/AE | | | | | |
|---|---|---|---|---|---|
| Exemples | Monomères | | Conversion (%) | $\overline{Mn}_{SEC}$ | $\overline{Mw}/\overline{Mn}$ |
| | % en poids AE | % en poids MAM | | | |
| 37 | 1,0 | 99,0 | 100 | 117600 | 1,5 |
| 38 | 3,3 | 96,7 | 60 | 55500 | 1,7 |
| 39 | 5,0 | 95,0 | 50 | 42750 | 1,85 |

**Revendications**

**1.** Copolymères statistiques vivants, répondant à la formule générale (Ia) ou (Ib) :

$$[P(A - co - B)]^{-} M^{+} / n \text{ Ligand} \quad (Ia)$$

$$M^{+\,-}[P(A - co - B)]^{-} M^{+} / 2n \text{ Ligand} \quad (Ib)$$

dans laquelle :

- les notations "P" et "co" illustrent l'état copolymérisé d'au moins deux comonomères de base A et B ;
- les comonomères de base sont choisis dans le groupe comprenant les monomères méthacryliques, acryliques et les maléimides, au moins l'un des comonomères étant un monomère acrylique ou méthacrylique ;
- M désigne un métal alcalin ou alcalino-terreux issu d'un amorceur monofonctionnel ou bifonctionnel selon que le copolymère statistique vivant est représenté par la formule respectivement (Ia) ou (Ib) ;
- "Ligand" désigne :

  (a) un complexant macrocyclique non azoté ; ou
  (b) un alcoolate de métal alcalin de formule (II) ou (III) :

$$R^1(OR^2)_mOM^1 \quad (II)$$

$$M^1(OR^2)_mOM^1 \quad (III)$$

dans laquelle :

- $M^1$ représente un métal alcalin ;
- $R^1$ est un radical alkyle, linéaire ou ramifié, ayant de 1 à 6 atomes de carbone ou un radical arylalkyle dans lequel le reste alkyle est en $C_1$-$C_6$, ou un radical alkylaryle dans lequel le groupe alkyle a de 1 à 6 atomes de carbone ;
- $R^2$ est un radical alkylène, linéaire ou ramifié, ayant de 2 à 4 atomes de carbone ;
- m est le nombre entier 1, 2 ou 3 ; et

- n est un nombre entier de 1 à 50.

**2.** Copolymères statistiques vivants selon la revendication 1, caractérisés par le fait que les monomères méthacryliques sont choisis parmi les méthacrylates de formule :

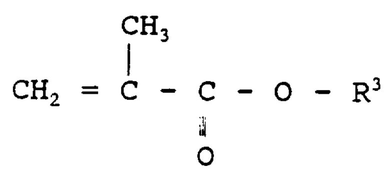

dans laquelle $R^3$ est choisi parmi les radicaux alkyle en $C_1$-$C_{18}$, linéaires ou ramifiés, primaires, secondaires ou tertiaires, cycloalkyle en $C_5$-$C_{18}$, (alcoxy en $C_1$-$C_{18}$)-alkyle en $C_1$-$C_{18}$, (alkylthio en $C_1$-$C_{18}$)-alkyle en $C_1$-$C_{18}$, aryle et arylalkyle, ces radicaux étant éventuellement substitués par au moins un atome d'halogène et/ou au moins un groupe hydroxyle après protection de ce groupe hydroxyle, les groupes alkyle ci-dessus étant linéaires ou ramifiés ; les méthacrylates de glycidyle, de norbornyle, d'isobornyle, le méthacrylonitrile, les mono- et -di-(alkyl en $C_1$-$C_{18}$)-méthacrylamides.

**3.** Copolymères statistiques vivants selon la revendication 1, caractérisés par le fait que les monomères acryliques sont choisis parmi les acrylates de formule :

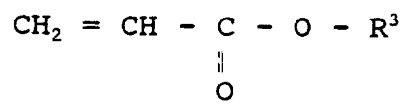

dans laquelle $R^3$ est tel que défini à la revendication 2, les acrylates de glycidyle, de norbornyle, d'isobornyle, l'acrylonitrile et les di(alkyl en $C_1$-$C_{18}$)-acrylamides.

**4.** Copolymères statistiques vivants selon la revendication 1, caractérisé par le fait que les maléimides monomères sont choisis parmi le maléimide et les composés de formule :

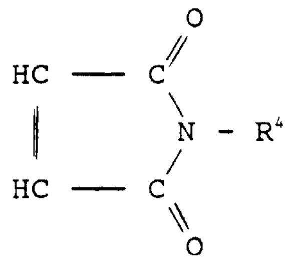

dans laquelle $R^4$ est un radical alkyle, arylalkyle, aryle ou alkylaryle ayant de 1 à 12 atomes de carbone.

**5.** Copolymères statistiques vivants selon l'une des revendications 1 à 3, caractérisés par le fait que le monomère A est le méthacrylate de méthyle, et le monomère B, l'acrylate de tert.-butyle.

**6.** Copolymères statistiques vivants selon l'une des revendications 1 à 5, caractérisés par le fait que l'amorceur monofonctionnel est choisi parmi ceux de formule générale (IV) :

$$R^5\text{-}M \qquad (IV)$$

où $R^5$ désigne :

- un radical alkyle à chaîne droite ou ramifiée, contenant 2 à 6 atomes de carbone ; ou
- un radical aryle à un ou plusieurs cycles, éventuellement substitué ; ou
- un radical alcényle en $C_2$-$C_6$ substitué par aryle ou alkylaryle ; ou
- un radical alkyle, linéaire ou ramifié, contenant 1 à 6 atomes de carbone, substitué par au moins un groupe phényle,

ainsi que parmi les amorceurs anioniques des méthacrylates comme les $\alpha$-lithioisobutyrates et les amidures.

**7.** Copolymères statistiques vivants selon la revendication 6, caractérisés par le fait que l'amorceur monofonctionnel de formule (IV) est choisi parmi le sec.-butyllithium, le n-butyllithium, le fluorényllithium, l'alphaméthylstyryllithium, le 1,1-diphénylhexyllithium, le diphénylméthyllithium ou -sodium ou -potassium et le 1,1-diphényl-3-méthylpentyllithium.

**8.** Copolymères statistiques vivants selon l'une des revendications 1 à 5, caractérisés par le fait que l'amorceur bifonctionnel est choisi parmi les composés de formule (V) :

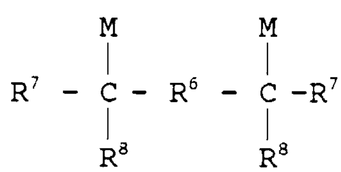

(V)

dans laquelle :

- M est tel que défini à la revendication 1 ; et
- $R^6$ représente un radical organique divalent, aliphatique, cycloaliphatique, aromatique ou comportant au moins un groupement cycloaliphatique ou aromatique, $R^6$ pouvant comporter des substituants ; et
- $R^7$ et $R^8$ représentant chacun indépendamment un radical organique monovalent, aliphatique, cycloaliphatique, aromatique ou comportant au moins un groupement cycloaliphatique ou aromatique, $R^7$ et $R^8$ pouvant comporter des substituants.

**9.** Copolymères statistiques vivants selon la revendication 8, caractérisés par le fait que l'amorceur bifonctionnel de formule (V) est choisi parmi le 1,1,4,4-tétraphényl-1,4-dilithiobutane (TPDLB) et le 1,1,4,4-tétraphényl-1,4-disodiobutane.

**10.** Copolymères statistiques vivants selon l'une des revendications 1 à 5, caractérisés par le fait que l'amorceur bifonctionnel dérive d'un précurseur choisi parmi le naphtalène lithium, le naphtalène sodium, le naphtalène potassium et leurs homologues.

**11.** Copolymères statistiques vivants selon la revendication 10, caractérisés par le fait que l'amorceur bifonctionnel dérive d'un précurseur choisi parmi le naphtalène lithium, le naphtalène sodium, le naphtalène potassium et leurs homologues, mis en oeuvre en présence d'α-méthylstyrène.

**12.** Copolymères statistiques vivants selon l'une des revendications 1 à 11, caractérisés par le fait que le complexant macrocyclique non azoté comme ligand est choisi parmi les polyéthers et les polythioéthers cycliques, tels que notamment les poly(thio)éthers macrocycliques dont l'anneau macrocyclique contient au moins 14 atomes de carbone et d'oxygène, chaque atome d'oxygène de l'anneau étant séparé des autres atomes d'oxygène de l'anneau par deux ou trois atomes de carbone.

**13.** Copolymères statistiques vivants selon la revendication 12, caractérisés par le fait que le complexant macrocyclique non azoté est le 2,3,11,12-dibenzo-1,4,7,10,13,16-hexaoxacyclooctadéca-1,11-diène (DB-18-CE-6).

**14.** Copolymères statistiques vivants selon l'une des revendications 1 à 11, caractérisés par le fait que l'alcoolate de métal alcalin de formule (II) ou (III) comme ligand est choisi parmi les alcoolates dans la formule desquels :

- $R^1$ représente méthyle, éthyle, butyle et benzyle ;
- $R^2$ représente éthylène, propylène, butylène et isopropylène ; et
- $M^1$ est le lithium, le sodium ou le potassium.

**15.** Procédé de fabrication de copolymères statistiques vivants tels que définis à l'une des revendications 1 à 14, caractérisé par le fait qu'on conduit une copolymérisation anionique d'au moins un monomère A et d'au moins un monomère B, à l'aide d'un système d'amorçage comprenant :

(1) au moins un amorceur monofonctionnel ou bifonctionnel ; et
(2) au moins un ligand choisi parmi (a) les complexants macrocycliques non azotés, ou (b) les alcoolates de métaux alcalins représentés par la formule (II) ou (III), telle que définie à la revendication 1, le rapport molaire ligand (a) ou ligand (b)/amorceur étant compris entre 1 et 50.

**16.** Procédé selon la revendication 15, caractérisé par le fait que le rapport molaire ligand (a)/amorceur est compris entre 1 et 5.

**17.** Procédé selon la revendication 15, caractérisé par le fait que le rapport molaire ligand (b)/amorceur est compris entre 3 et 10.

**18.** Procédé selon l'une des revendications 15 à 17, caractérisé par le fait qu'on conduit la copolymérisation à une température comprise entre -100°C et +120°C.

**19.** Procédé selon la revendication 18, caractérisé par le fait que la température de réaction est comprise entre -78°C et +70°C.

**20.** Procédé selon l'une des revendications 15 à 18, caractérisé par le fait qu'on conduit la copolymérisation en masse ou en présence d'au moins un solvant aprotique, polaire ou non polaire, choisi parmi les solvants aromatiques, tels que le benzène, le toluène, l'éthylbenzène, ou les solvants tels que le tétrahydrofuranne, le diglyme, le tétraglyme, l'orthoterphényle, le biphényle, la décaline, la tétraline ou le diméthylformamide.

**21.** Procédé selon la revendication 20, caractérisé par le fait que le solvant est le tétrahydrofuranne ou le toluène ou un mélange des deux.

**22.** Procédé de fabrication par voie anionique de copolymères statistiques comprenant au moins un motif (méth)acrylique, caractérisé par le fait que l'on désactive les copolymères statistiques vivants tels que définis à l'une des revendication 1 à 14 ou obtenus par le procédé tel que défini à l'une des revendications 15 à 21, par réaction avec une source de protons consistant notamment en un alcool, de l'eau ou un acide protonique ; et, le cas échéant, on conduit une transestérification ou une hydrolyse en milieu acide du copolymère obtenu.

**23.** Copolymères statistiques comprenant au moins un motif (méth)acrylique, obtenus par voie anionique selon la revendication 22, caractérisés par le fait qu'ils présentent une masse moléculaire moyenne en nombre comprise entre 5 000 et 500 000.

**24.** Copolymères statistiques selon la revendication 23, caractérisés par le fait qu'ils présentent un indice de polydispersité compris entre 1,05 et 3.

**25.** Copolymère à blocs dont au moins un bloc est un bloc à base d'un copolymère statistique comprenant au moins un motif (méth)acrylique et formé à partir d'un copolymère statistique vivant tel que défini à l'une des revendications 1 à 14, ou obtenu par le procédé tel que défini à l'une des revendications 15 à 21, et un bloc ou plusieurs blocs, identiques ou différents, chacun à base d'un polymère autre que le copolymère statistique précité.

**Patentansprüche**

**1.** Lebende statistische Copolymere der allgemeinen Formel (Ia) oder (Ib)

$$[P(A - co - B)]^{-} M^{+} /n \text{ Ligand} \quad (Ia)$$

$$M^{+} \, {}^{-}[P(A - co - B)]^{-} M^{+} / 2n \text{ Ligand} \quad (Ib)$$

wobei

- die Bezeichnung "P" und "co" den copolymerisierten Zustand mindestens zweier Basiscomonomere A und B veranschaulichen ;
- die Basiscomonomere aus der Gruppe von Methacryl-, Acryl- und Maleinimidmonomeren ausgewählt sind, wobei mindestens eines der Comonomere ein Acryl- oder Methacrylmonomer ist;
- M ein Alkali- oder Erdalkalimetall bezeichnet, das aus einem monofunktionellen oder bifunktionellen Starter stammt, je nachdem, ob das lebende statistische Copolymer durch die Formel (Ia) bzw. (Ib) dargestellt wird;
- der Begriff "Ligand"

  (a) einen nicht stickstoffhaltigen macrocyclischen Komplexbildner; oder
  (b) ein Alkalimetallalkoholat der Formel (II) oder (III)

$$R^1(OR^2)_mOM^1 \quad (II)$$

$$M^1(OR^2)_mOM^1 \quad (III)$$

  in der

  • $M^1$ ein Alkalimetall darstellt;
  • $R^1$ ein linearer oder verzweigter Alkylrest mit 1 bis 6 Kohlenstoffatomen oder ein Arylalkylrest mit einem $C_1$-$C_6$-Alkylrest oder ein Alkylarylrest mit einer Alkylgruppe von 1 bis 6 Kohlenstoffatomen ist;
  • $R^2$ ein linearer oder verzweigter Alkylenrest mit 2 bis 4 Kohlenstoffatomen ist; und
  • m eine ganze Zahl 1, 2 oder 3 ist,

  bezeichnet; und
- n eine ganze Zahl von 1 bis 50 ist.

**2.** Lebende statistische Copolymere nach Anspruch 1, dadurch gekennzeichnet, daß die Methacrylmonomere ausgewählt sind aus Methacrylaten der Formel

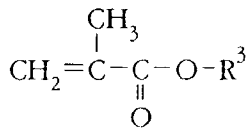

in der $R^3$ ausgewählt ist aus primären, sekundären oder tertiären, linearen oder verzweigten $C_1$-$C_{18}$-Alkylresten, $C_5$-$C_{18}$-Cycloalkylresten, ($C_1$-$C_{18}$-Alkoxy)-$C_1C_{18}$-alkylresten, ($C_1$-$C_{18}$-Alkylthio)-$C_1$-$C_{18}$-alkylresten, Arylresten und Arylalkylresten, wobei diese Reste gegebenenfalls mit mindestens einem Halogenatom und/oder mit mindestens einer Hydroxylgruppe nach Schutz dieser Hydroxylgruppe substituiert sind, wobei die oben genannten Alkylgruppen linear oder verzweigt sind;
Glycidyl-, Norbornyl- und Isobomylmethacrylaten, Methacrylnitril und Mono-und Di-($C_1$-$C_{18}$-alkyl)-methacrylamiden.

**3.** Lebende statistische Copolymere nach Anspruch 1, dadurch gekennzeichnet, daß die Acrylmonomere ausgewählt sind aus Acrylaten der Formel

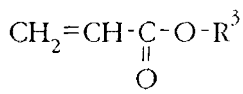

in der $R^3$ der Definition von Anspruch 2 entspricht;
Glycidyl-, Norbornyl- und Isobornylacrylaten, Acrylnitril und Mono- und Di-($C_1$-$C_{18}$-alkyl)-acrylamiden.

**4.** Lebende statistische Copolymere nach Anspruch 1, dadurch gekennzeichnet, daß die Maleinimidmonomere ausgewählt sind aus Maleinimid und Verbindungen der Formel

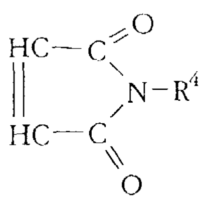

in der $R^4$ einen Alkyl-, Arylalkyl-, Aryl- oder Alkylarylrest mit 1 bis 12 Kohlenstoffen bezeichnet.

**5.** Lebende statistische Copolymere nach einem der Ansprüche 1 bis 3, dadurch gekennzeichnet, daß das Monomer A Methylmethacrylat ist und das Monomer B tert.-Butylacrylat ist.

**6.** Lebende statistische Copolymere nach einem der Ansprüche 1 bis 5, dadurch gekennzeichnet, daß der monofunktionelle Starter aus Verbindungen der allgemeinen Formel (IV)

$$R^5\text{-M} \qquad \text{(IV)}$$

wobei $R^5$

- einen Alkylrest mit gerader oder verzweigter Kette und 2 bis 6 Kohlenstoffatomen; oder
- einen gegebenenfalls substituierten Arylrest mit einem oder mehreren Ringen; oder

- einen mit einem Aryl- oder Alkylarylrest substituierten $C_2$-$C_6$-Alkylenrest; oder
- einen mit mindestens einer Phenylgruppe substituierten, linearen oder verzweigten Alkylrest mit 1 bis 6 Kohlenstoffatomen

bezeichnet,
sowie aus anionischen Startern für die Methacrylate wie den α-Lithiumisobutyraten und den Amididen ausgewählt ist.

**7.** Lebende statistische Copolymere nach Anspruch 6, dadurch gekennzeichnet, daß der monofunktionelle Starter der Formel(IV) ausgewählt ist aus sek.-Butyllithium, n-Butyllithium, Fluorenyllithium, α-Methylstyryllithium, 1,1-Diphenylhexyllithium, Diphenylmethyllithium, -natrium oder -kalium und 1,1-Diphenyl-3-methylpentyllithium.

**8.** Lebende statistische Copolymere nach einem der Ansprüche 1 bis 5, dadurch gekennzeichnet, daß der bifunktionelle Starter ausgewählt ist aus Verbindungen der Formel (V)

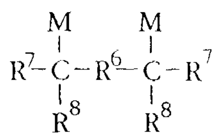

(V)

in der

- M der Definition von Anspruch 1 entspricht;
- $R^6$ einen zweiwertigen organischen Rest darstellt, der aliphatisch, cycloaliphatisch oder aromatisch ist oder mindestens eine aromatische oder cycloaliphatische Gruppe umfaßt, wobei $R^6$ Substituenten enthalten kann; und
- $R^7$ und $R^8$ unabhängig voneinander jeweils einen einwertigen organischen Rest darstellen, der aliphatisch, cycloaliphatisch oder aromatisch ist oder mindestens eine aromatische oder cycloaliphatische Gruppe umfaßt, wobei $R^7$ und $R^8$ Substituenten enthalten können.

**9.** Lebende statistische Copolymere nach Anspruch 8, dadurch gekennzeichnet, daß der bifunktionelle Starter der Formel (V) ausgewählt ist aus 1,1,4,4-Tetraphenyl-1,4-dilithiumbutan (TPDLB) und 1,1,4,4-Tetraphenyl-1,4-dinatriumbutan.

**10.** Lebende statistische Copolymere nach einem der Ansprüche 1 bis 5, dadurch gekennzeichnet, daß der bifunktionelle Starter sich von einem Vorläufer ableitet, der ausgewählt ist aus Naphthalinlithium, Naphthalinnatrium, Naphthalinkalium und deren Homologen.

**11.** Lebende statistische Copolymere nach Anspruch 10, dadurch gekennzeichnet, daß der bifunktionelle Starter sich von einem Vorläufer ableitet, der ausgewählt ist aus Naphthalinlithium, Naphthalinnatrium, Naphthalinkalium und deren Homologen, eingesetzt in Gegenwart von α-Methylstyrol.

**12.** Lebende statistische Copolymere nach einem der Ansprüche 1 bis 11, dadurch gekennzeichnet, daß der nicht stickstoffhaltige makrocylische Komplexbildner als Ligand ausgewählt ist aus cyclischen Polyethern und Polythioethern, wie insbesondere makrocyclischen Poly(thio)ethern, deren makrocyclischer Ring mindestens 14 Kohlenstoff- und Sauerstoffatome, wobei jedes Sauerstoffatom des Rings von den anderen Sauerstoffatomen des Rings durch zwei oder drei Kohlenstoffatome getrennt ist.

**13.** Lebende statistische Copolymere nach Anspruch 12, dadurch gekennzeichnet, daß der nicht stickstoffhaltige Komplexbildner 2,3,11,12-Dibenzo-1,4,7,10, 13,16-hexaoxacyclooctadeca-1,11-dien(DB-18-CE-6) ist.

**14.** Lebende statistische Copolymere nach einem der Ansprüche 1 bis 11, dadurch gekennzeichnet, daß das Alkalimetallalkoholat der Formel (II) oder (III) als Ligand ausgewählt ist aus Alkoholaten, in deren Formel

- $R^1$ Methyl, Ethyl, Butyl und Benzyl darstellt;
- $R^2$ Ethylen, Propylen, Butylen und Isopropylen darstellt; und

- $M^1$ Lithium, Natrium oder Kalium ist.

**15.** Verfahren zur Herstellung von lebenden statistischen Copolymeren nach einem der Ansprüche 1 bis 14, dadurch gekennzeichnet, daß man eine anionische Copolymerisation mindestens eines Monomers A und mindestens eines Monomers B mit Hilfe eines Startersystems durchführt, das

(1) mindestens einen monofunktionellen oder bifunktionellen Starter; und
(2) mindestens einen Liganden, der ausgewählt ist aus (a) stickstofffreien makrocyclischen Komplexbildnern oder (b) Alkalimetallalkoholaten der Formel (II) oder (III) nach der Definition von Anspruch 1

enthält, wobei das Molverhältnis von Ligand (a) oder Ligand(b)/starter zwischen 1 und 50 liegt.

**16.** Verfahren nach Anspruch 15, dadurch gekennzeichnet, daß das Molverhältnis Ligand (a)/Starter zwischen 1 und 5 liegt.

**17.** Verfahren nach Anspruch 15, dadurch gekennzeichnet, daß das Molverhältnis Ligand (b)/Starter zwischen 3 und 10 liegt.

**18.** Verfahren nach einem der Ansprüche 15 bis 17, dadurch gekennzeichnet, daß man die Copolymerisation bei einer Temperatur zwischen -100 °C und +120 °C durchführt.

**19.** Verfahren nach Anspruch 18, dadurch gekennzeichnet, daß die Reaktionstemperatur zwischen -78 °C und +70 °C liegt.

**20.** Verfahren nach einem der Ansprüche 15 bis 18, dadurch gekennzeichnet, daß man die Copolymerisation in Masse oder in Gegenwart mindestens eines polaren oder nicht polaren, aprotischen Lösungsmittels durchführt, das ausgewählt ist aus aromatischen Lösungsmitteln wie Benzol, Toluol oder Ethylbenzol oder Lösungsmitteln wie Tetrahydrofuran, Diglyme, Tetraglyme, Orthoterphenyl, Biphenyl, Dekalin, Tetralin oder Dimethylformamid.

**21.** Verfahren nach Anspruch 20, dadurch gekennzeichnet, daß das Lösungsmittel Tetrahydrofuran oder Toluol oder eine Mischung dieser beiden Lösungsmittel ist.

**22.** Verfahren zur Herstellung von statistischen Copolymeren mit mindestens einer (Meth-)Acryleinheit auf anionischem Weg, dadurch gekennzeichnet, daß man die lebenden statistischen Copolymere, wie sie in einem der Ansprüche 1 bis 14 definiert sind oder durch ein Verfahren nach einem der Ansprüche 15 bis 21 erhalten worden sind, durch Reaktion mit einer Protonenquelle desaktiviert, die insbesondere aus einem Alkohol, Wasser oder einer Protonensäure besteht; und daß man gegebenenfalls eine Umesterung oder Hydrolyse des erhaltenen Copolymers im sauren Milieu durchführt.

**23.** Statistische Copolymere mit mindestens einer (Meth-)Acryleinheit, erhalten auf anionischem Weg gemäß Anspruch 22, dadurch gekennzeichnet, daß sie eine zahlenmittlere Molekularmasse zwischen 5.000 und 500.000 aufweisen.

**24.** Statistische Copolymere nach Anspruch 23, dadurch gekennzeichnet, daß sie einen Polydispersitätsindex zwischen 1,05 und 3 aufweisen.

**25.** Blockcopolymer, bei dem mindestens ein Block ein Block auf Basis eines statistischen Copolymers ist, das mindestens eine (Meth-)Acryleinheit enthält und ausgehend von einem lebenden statistischen Copolymer nach einem der Ansprüche 1 bis 14 gebildet oder durch das Verfahren nach einem der Ansprüche 15 bis 21 erhalten worden ist, und ein Block oder mehrere Blöcke, identisch oder verschieden, jeweils auf Basis eines anderen Polymers als das zuvor genannte statistische Copolymer sind.

## Claims

**1.** Living random copolymers corresponding to the general formula (Ia) or (Ib):

$$[P(A - co - B)]^{-} M^{+} / n \text{ Ligand} \qquad (Ia)$$

$$M^{+} \, {}^{-}[P(A - co - B)]^{-} M^{+} / 2n \text{ Ligand} \qquad (Ib)$$

in which:

- the notations "P" and "co" illustrate the copolymerized state of at least two base comonomers A and B;
- the base comonomers are chosen from the group including methacrylic and acrylic monomers and maleimides, at least one of the comonomers being an acrylic or methacrylic monomer;
- M denotes an alkali or alkaline-earth metal originating from a monofunctional or difunctional initiator, according to whether the living random copolymer is denoted by the formula (Ia) or (Ib) respectively;
- "Ligand" denotes:

  (a) a nonnitrogenous macrocyclic complexant; or
  (b) an alkali metal alcoholate of formula (II) or (III):

$$R^1(OR^2)_mOM^1 \qquad (II)$$

$$M^1(OR^2)_mOM^1 \qquad (III)$$

  in which:

  - $M^1$ denotes an alkali metal;
  - $R^1$ is a linear or branched alkyl radical containing from 1 to 6 carbon atoms or an arylalkyl radical in which the alkyl residue is $C_1$-$C_6$, or an alkylaryl radical in which the alkyl group has from 1 to 6 carbon atoms;
  - $R^2$ is a linear or branched alkylene radical containing from 2 to 4 carbon atoms;
  - m is the integer 1, 2 or 3; and

- n is an integer from 1 to 50.

**2.** Living random copolymers according to Claim 1, characterized in that the methacrylic monomers are chosen from the methacrylates of formula:

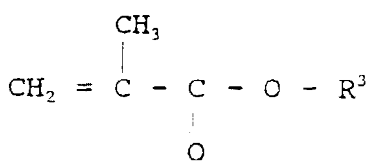

in which $R^3$ is chosen from primary, secondary or tertiary, linear or branched $C_1$-$C_{18}$ alkyl, $C_5$-$C_{18}$ cycloalkyl, ($C_1$-$C_{18}$ alkoxy)-$C_1$-$C_{18}$ alkyl, ($C_1$-$C_{18}$ alkylthio)-$C_1$-$C_{18}$ alkyl, aryl and arylalkyl radicals, these radicals being optionally substituted by at least one halogen atom and/or at least one hydroxyl group after protection of this hydroxyl group, the above alkyl groups being linear or branched; glycidyl, norbornyl and isobornyl methacrylates, methacrylonitrile and mono- and di-($C_1$-$C_{18}$ alkyl) methacrylamides.

**3.** Living random copolymers according to Claim 1, characterized in that the acrylic monomers are chosen from the acrylates of formula:

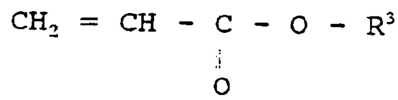

in which $R^3$ is as defined in Claim 2, glycidyl, norbornyl and isobornyl acrylates, acrylonitrile and di($C_1$-$C_{18}$ alkyl) acrylamides.

**4.** Living random copolymers according to Claim 1, characterized in that the maleimide monomers are chosen from maleimide and the compounds of formula:

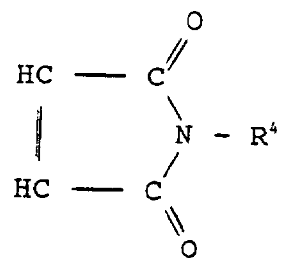

in which $R^4$ is an alkyl, arylalkyl, aryl or alkylaryl radical containing from 1 to 12 carbon atoms.

**5.** Living random copolymers according to one of Claims 1 to 3, characterized in that the monomer A is methyl methacrylate and the monomer B is tert-butyl acrylate.

**6.** Living random copolymers according to one of Claims 1 to 5, characterized in that the monofunctional initiator is chosen from those of general formula (IV):

$$R^5\text{-}M \qquad (IV)$$

where $R^5$ denotes:

- an alkyl radical with a straight or branched chain containing 2 to 6 carbon atoms; or
- an aryl radical containing one or more rings, optionally substituted; or
- a $C_2$-$C_6$ alkenyl radical substituted by aryl or alkylaryl; or
- a linear or branched alkyl radical containing 1 to 6 carbon atoms, substituted by at least one phenyl group,

and from the anionic initiators for methacrylates such as $\alpha$-lithioisobutyrates and amidures.

**7.** Living random copolymers according to Claim 6, characterized in that the monofunctional initiator of formula (IV) is chosen from secbutyllithium, n-butyllithium, fluorenyllithium, alphamethylstyryllithium, 1,1-diphenylhexyllithium, diphenylmethyllithium or -sodium or -potassium and 1,1-diphenyl-3-methylpentyllithium.

**8.** Living random copolymers according to one of Claims 1 to 5, characterized in that the difunctional initiator is chosen from the compounds of formula (V):

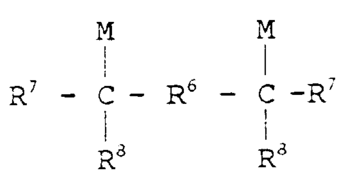

(V)

in which:

- M is as defined in Claim 1; and
- $R^6$ denotes an aliphatic, cycloaliphatic or aromatic divalent organic radical or one comprising at least one cycloaliphatic or aromatic group, it being possible for $R^6$ to carry substituents; and
- each of $R^7$ and $R^8$ independently denotes an aliphatic, cycloaliphatic or aromatic monovalent organic radical or one comprising at least one cycloaliphatic or aromatic group, it being possible for $R^7$ and $R^8$ to carry substituents.

**9.** Living random copolymers according to Claim 8, characterized in that the difunctional initiator of formula (V) is chosen from 1,1,4,4-tetraphenyl-1,4-dilithiobutane (TPDLB) and 1,1,4,4-tetraphenyl-1,4-disodiobutane.

**10.** Living random copolymers according to one of Claims 1 to 5, characterized in that the difunctional initiator is derived from a precursor chosen from naphthalene lithium, naphthalene sodium, naphthalene potassium and their homologues.

**11.** Living random copolymers according to Claim 10, characterized in that the difunctional initiator is derived from a precursor chosen from naphthalene lithium, naphthalene sodium, naphthalene potassium and their homologues, used in the presence of $\alpha$-methylstyrene.

**12.** Living random copolymers according to one of Claims 1 to 11, characterized in that the nonnitrogenous macrocyclic complexant as ligand is chosen from cyclic polyethers and polythioethers such as especially macrocyclic poly(thio) ethers whose macrocyclic ring contains at least 14 carbon and oxygen atoms, each oxygen atom in the ring being separated from the other oxygen atoms in the ring by two or three carbon atoms.

**13.** Living random copolymers according to Claim 12, characterized in that the nonnitrogenous macrocyclic complexant is 2,3,11,12-dibenzo-1,4,7,10,13,16-hexaoxacyclooctadeca-1,11-diene (DB-18-CE-6).

**14.** Living random copolymers according to one of Claims 1 to 11, characterized in that the alkali metal alcoholate of formula (II) or (III) as ligand is chosen from the alcoholates in the formula of which:

- $R^1$ denotes methyl, ethyl, butyl and benzyl;
- $R^2$ denotes ethylene, propylene, butylene and isopropylene; and
- $M^1$ is lithium, sodium or potassium.

**15.** Process for the manufacture of living random copolymers as defined in one of Claims 1 to 14, characterized in that an anionic copolymerization of at least one monomer A and of at least one monomer B is conducted with the aid of an initiating system including:

(1) at least one monofunctional or difunctional initiator; and
(2) at least one ligand chosen from (a) nonnitrogenous macrocyclic complexants or (b) alkali metal alcoholates denoted by the formula (II) or (III), as defined in Claim 1, the molar ratio ligand (a) or ligand (b)/initiator being between 1 and 50.

**16.** Process according to Claim 15, characterized in that the molar ratio ligand (a)/initiator is between 1 and 5.

**17.** Process according to Claim 15, characterized in that the molar ratio ligand (b)/initiator is between 3 and 10.

**18.** Process according to one of Claims 15 to 17, characterized in that the copolymerization is conducted at a temperature of between -100°C and +120°C.

**19.** Process according to Claim 18, characterized in that the reaction temperature is between -78°C and +70°C.

**20.** Process according to one of Claims 15 to 18, characterized in that the copolymerization is conducted in bulk or in the presence of at least one polar or nonpolar, aprotic solvent chosen from aromatic solvents such as benzene, toluene and ethylbenzene or solvents such as tetrahydrofuran, diglyme, tetraglyme, ortho-terphenyl, biphenyl, decalin, tetralin or dimethylformamide.

**21.** Process according to Claim 20, characterized in that the solvent is tetrahydrofuran or toluene or a mixture of the two.

**22.** Process for the manufacture by anionic route of random copolymers containing at least one (meth)acrylic unit, characterized in that the living random copolymers as defined in one of Claims 1 to 14 or obtained by the process as defined in one of Claims 15 to 21 are deactivated by reaction with a source of protons consisting especially of an alcohol, water or a protonic acid; and, if appropriate, a transesterification or a hydrolysis in acidic medium of the copolymer obtained is conducted.

**23.** Random copolymers including at least one (meth)acrylic unit, which are obtained by anionic route according to claim 22, characterized in that they have a number-average molecular mass of between 5 000 and 500 000.

**24.** Random copolymers according to Claim 23, characterized in that they have a polydispersity value of between 1.05 and 3.

**25.** Block copolymers in which at least one block is a block based on a random copolymer including at least one (meth) acrylic unit and formed from a living random copolymer as defined in one of Claims 1 to 14 or obtained by the process as defined in one of Claims 15 to 21, and a block or a number of identical or different blocks, each based on a polymer other than the abovementioned random copolymer.

FIGURE UNIQUE